# FASCICULE DE BREVET EUROPEEN

(11) **EP 1 593 659 B1**
(45) Date de publication et mention de la délivrance du brevet: **21.11.2007**
(21) Numéro de dépôt: 04291141.2
(22) Date de dépôt: 04.05.2004
(51) Int. Cl.: C04B 14/18, C04B 26/04, C09D 5/02, E04F 13/02

(54) **Procédé de réalisation d'un ouvrage, enduit de jointoiement et de surfaçage pour éléments de construction et son procédé de préparation**
Verfahren zur Herstellung von einem Bauobjekt, Fugen- und Flächenbearbeitungsmörtelzusammensetzung für Bauelemente und Verfahren zu ihrer Herstellung
Process for making a structure, pointing and surfacing compound for structural elements and process for preparing the same

(43) Date de publication de la demande: 09.11.2005
(73) Titulaire: LAFARGE PLATRES, 84915 Avignon Cedex (FR)
(72) Inventeur: Liling, Claude, 51100 Reims (FR)
(74) Mandataire: Hirsch & Associés

(56) Documents cités:
- EP-A- 0 681 998
- WO-A-00/47682
- WO-A-02/06183
- WO-A-97/02395
- US-A- 4 304 704
- US-A- 4 686 253
- US-A- 4 743 475
- US-A- 5 336 318

## Description

### DOMAINE DE L'INVENTION.

La présente invention concerne un enduit de jointoiement et de surfaçage pour des éléments de construction, en particulier des plaques de plâtre à parement en papier, ainsi qu'un procédé de réalisation d'un ouvrage tel qu'une cloison, un habillage mural ou un plafond.

### ARRIERE-PLAN TECHNOLOGIQUE.

Il est bien connu d'utiliser des plaques de plâtre pour réaliser des cloisons, des habillages d'éléments verticaux ou inclinés ou pour réaliser des plafonds suspendus ou non.

Ces plaques sont généralement constituées d'une âme essentiellement en plâtre, recouverte sur chacune de ses faces par une feuille servant la fois d'armature et de parement et qui peut être constituée de carton ou de fibres minérales.

De façon générale, on assemble des plaques de plâtre avec un premier enduit et on finit les joints entre les plaques avec un enduit complémentaire. Un enduit de remplissage (ou aussi appelé de bouchage) est utilisé en complément de la bande, et en général présente un retrait relativement faible, un bon collage et une bonne adhérence de la bande à joint. Un enduit de finition est utilisé lors de la dernière passe pour finir l'ouvrage afin que celui-ci présente une surface monolithique. Selon la demande WO-A-9702395 l'enduit présente la même couleur que le papier de parement de la plaque.

Le document WO 02/06183 décrit un enduit de jointoiement pour éléments de construction comprenant, en pourcentages massiques rapportés à la masse totale d'enduit :
- 50 à 85% d'une charge minérale ;
- 1 à 20% d'un liant organique dispersable en phase aqueuse ;
- 1 à 15% d'un agent silicate autre que la charge minérale ;
- 0,2 à 5% d'un agent hydrophobe qui est un dérivé silicone ;
- 0,05 à 5% d'alcool polyvinylique ;
- de l'eau pour arriver à 100%.

Le document US 4686253 décrit un enduit de jointoiement de finition comprenant :
- du carbonate de calcium ou du sulfate de calcium ;
- un agent modifiant la rhéologie (par exemple argile) ;
- de la perlite expansée imperméabilisée, avec une taille moyenne de particule inférieure à 70 microns et présente en une quantité de 3,5 à 25 % en masse sèche d'enduit ;
- un épaississant ;
- un liant ; et
- de l'eau permettant d'ajuster la viscosité.

Le document WO 00/47682 décrit une composition de revêtement de surface préparée à partir d'une poudre sèche comprenant du carbonate de calcium et 4% à 11% d'un liant polymère, 0,6 à 1,5% d'un agent épaississant et 0,10 à 0,35% d'un tensioactif, le tout par rapport à la masse de carbonate de calcium.

Lors de la pose d'un ouvrage sur un chantier, les différents intervenants sont en général le plaquiste qui pose les plaques, le jointiste qui prépare les joints entre plaques (souvent le jointiste et le plaquiste sont les mêmes, parfois le jointiste et le peintre sont les mêmes) et le peintre qui décore (après en général la pose d'une couche dite d'impression ou primaire, sauf dans le cas de la demande WO-A-9702395 précitée). En général les peintres utilisent actuellement des peintures qui sont appliquées à l'aide de buse de projection, selon un système dit "Airless", à savoir un récipient à plusieurs dizaines de mètres du lieu d'application et un unique tuyau avec un pistolet équipé d'une buse au bout, le tout étant sans air, ce qui offre de nombreux avantages de stockage entre chantiers, etc. En général la pression utilisée est comprise entre 120 et 200 bar.

Dans de nombreux cas le peintre, responsable de l'aspect final, est obligé de revenir sur les joints entre les plaques et de les traiter à nouveau.

Il existe donc un besoin pour un enduit susceptible d'être appliqué par la même personne et/ou le même matériel Airless, et qui soit approprié pour le jointoiement, tant en bouchage qu'en finition, et pour le surfaçage

### RESUME DE L'INVENTION.

L'invention a donc pour objet un enduit comprenant, en pourcentages massiques rapportés à la masse totale d'enduit :
- de 40 à 60% d'une charge minérale ayant un diamètre d50 compris entre 5 et 20 microns;
- de 5 à 10% de perlite expansée hydrophobée ayant un diamètre d50 compris entre 20 et 100 microns; et
- de 4 à 20% d'un liant.

Des modes de réalisation de l'enduit correspondent aux revendications 2 à 18.

L'invention a aussi pour objet un procédé de préparation de l'enduit selon l'invention, selon les revendications 19 à 21.

L'invention a aussi pour objet un procédé de réalisation d'un ouvrage, comprenant le jointoiement avec un enduit et/ou le surfaçage par application d'un enduit, et/ou le jointoiement et le surfaçage par application d'un enduit, caractérisé en ce que l'enduit est appliqué par la technique Airless ou sans air, et en ce que l'enduit est tel que décrit dans la présente demande.

Un autre objet de la présente invention est donc un procédé de réalisation d'un ouvrage, comprenant la juxtaposition d'éléments de construction, éventuellement le remplissage de l'espacement entre les éléments de construction au moyen d'un enduit de remplissage, la pose d'une bande, le recouvrement de la bande au moyen d'un enduit de finition (avec éventuellement le remplissage au moyen d'un enduit de remplissage) et se caractérisant en ce qu'on utilise comme enduit de finition, l'enduit selon l'invention.

Un autre objet de l'invention est encore un procédé de réalisation d'un ouvrage, comprenant le surfaçage d'éléments de construction par emploi de l'enduit selon l'invention.

Un autre objet de l'invention est encore un procédé de réalisation d'un ouvrage, combinant les deux objets précédents selon l'invention.

D'autres caractéristiques et avantages de l'invention vont maintenant être décrits en détail dans l'exposé qui suit.

### DESCRIPTION DETAILLEE DE L'INVENTION.

### Enduit selon l'invention

L'enduit selon l'invention comprend, ainsi qu'il a été indiqué, les éléments suivants (en % en poids par rapport au poids total de l'enduit:
- de 40 à 60%, de préférence de 40 à 50%, d'une charge minérale ayant un diamètre d50 compris entre 5 et 20 microns, de préférence entre 10 et 15 microns;
- de 5 à 10%, de préférence de 6 à 7,5%, de perlite expansée hydrophobée ayant un diamètre d50 compris entre 20 et 100 microns, de préférence entre 30 et 70 microns; et
- de 4 à 20%, de préférence de 5 à 10%, d'un liant.

La balance comprend de l'eau et éventuellement d'autres composants.

Comme charge minérale, on peut utiliser toute charge minérale habituellement employée pour la fabrication d'un enduit de jointoiement. Il s'agit en général d'une charge minérale de couleur claire, de préférence blanche et dont le diamètre moyen d₅₀ (poids) se situe en général entre 5 et 20 microns, de sorte que l'enduit donne après séchage une surface lisse et puisse être pompé facilement par une machine Airless. Des exemples de d50 approprié sont 10 et 15 microns.

Comme exemple de charge minérale, on peut citer carbonate de calcium, sulfate de calcium anhydre ou dihydraté, carbonate de magnésium, dolomie, silices, silicates, aluminates ou autres.

De préférence, on utilise du carbonate de calcium CaCO₃.

La perlite expansée hydrophobée présente un d50 (poids) compris entre 20 et 100 microns. La densité apparente de cette perlite est de préférence supérieure à 100kg/m³. Le d50 des particules est généralement compris entre 20 et 100 microns, de préférence 35 à 70. Cette perlite est connue et peut par exemple être de la Noblite^{®}, G50, G100, G200, G400 ou Sil Cell^{®}. Sans vouloir être lié par une théorie, le demandeur pense que la dimension faible des particules et/ou une surface spécifique relativement faible (comparée à une dimension de 150 microns et plus et/ou une surface spécifique importante pour de la perlite "classique") permet d'éviter un écrasement des particules, ce qui offre la possibilité de passer dans un procédé dit Airless.

Le liant utilisé est un liant classique dans l'art des enduits, dispersable en phase aqueuse. Il peut se présenter sous la forme d'un extrait sec ou sous forme, par exemple de latex, à 50% dans l'eau. A titre d'exemple de tels liants, on peut mentionner les homopolymères d'alcool polyvinylique, les homopolymères acétates de polyvinyle (plastifiés ou non), les copolymères éthylène/acétate de vinyle (EVA plastifiés ou non), éthylène/versatate de vinyle, acétate de vinyle/versatate de vinyle, polyacryliques, copolymères acétate de vinyle/acryliques, copolymères styrèniques/acryliques, styrène/butadiène, les terpolymères acétate de vinyle/versatates de vinyle /maléates de vinyle, acétate de vinyle/versatate de vinyle/acryliques, terpolymère vinyl acétate/vinyl ester d'un acide (à chaîne longue)/ester d'acide acrylique, les terpolymères acryliques et leurs mélanges. On préférera utiliser deux liants ou plus, l'un plus spécifiquement dédié à la protection contre l'eau et l'autre plus particulièrement dédié à la plasticité. On pourra ainsi utiliser des combinaisons de liants: co- ou terpolymère acétate de vinyle/copolymère vinylique et copolymère vinylique/copolymère styrènique/acrylique. Lorsque ces polymères sont fournis, ils le sont soit sous forme de poudre, soit sous forme de dispersion dans l'eau (en général selon un taux d'environ 50%).

La proportion de liant organique est préférentiellement comprise entre 5 et 10% du poids total de l'enduit.

Outre les éléments indiqués ci-dessus, l'enduit comprend généralement un ou plusieurs des autres composants suivants:
- un agent glissant en une quantité par exemple de 0,5 à 10%, de préférence de 1 à 5%; cet agent glissant peut être un agent silicaté (différent de la charge minérale) notamment une argile de type attapulgite ou il peut être tout agent glissant connu par exemple talc, mica ou un stéarate, notamment de zinc;
- un agent de maniabilité qui est un agent rétenteur d'eau et épaississant, en une quantité par exemple de 1 à 15‰; cet agent rétenteur d'eau peut être de la méthylhydroxyéthylcellulose;
- un agent anti-mousse, en une quantité par exemple de 1 à 15%; cet agent anti-mousse est par exemple un tensio-actif non-ionique;
- un dérivé siliconé, en une quantité par exemple de 1 à 15‰; ce dérivé siliconé sert par exemple de tampon pH pour obtenir un milieu basique et/ou de régulateur de la viscosité et/ou pour permettre un meilleur détapisser et il peut être choisi parmi les siliconates, les silanes, les huiles de silicone hydrogénées, les émulsions de silicone, les émulsions amino-siliconées, les résines alkyl-siloxanes telles que hydrogénométhylpolysiloxane et polydiméthylsiloxane aminé, et leurs mélanges, de préférence les siliconates;
- des biocides;
- des pigments et azurants optiques;
- des agents dispersants;
- des anti-gel;
- etc.

Un enduit préféré selon l'invention peut comprendre, en pourcentages massiques rapportés à la masse totale d'enduit :
- de 40 à 50% de carbonate de calcium ayant un diamètre d50 compris entre 5 et 20 microns, de préférence entre 10 et 15 microns;
- de 5 à 10%, de préférence de 6 à 7,5%, de perlite expansée hydrophobée;
- de 5 à 10% d'un liant;
- de 1 à 5% d'un agent glissant comprenant une argile et/ou un stéarate;
- de 1 à 15‰ d'un agent rétenteur d'eau;
- de 1 à 15‰ d'un agent anti-mousse; et éventuellement
- de 1 à 15‰ d'un dérivé siliconé, de préférence un siliconate.

L'enduit selon l'invention présente une densité généralement comprise entre 0,9 et 1,3, de préférence entre 1 et 1,25, plus préférentiellement 1,15 à 1,21.

L'enduit présent généralement un seuil d'écoulement, c'est-à-dire que sa viscosité diminue lorsqu'un cisaillement est appliqué et remonte lorsque le cisaillement disparaît. Ceci permet l'application par la technique Airless. La viscosité Brookfield de l'enduit, au niveau de la sortie de la buse de projection, est comprise par exemple entre 0,2 et 0,6 fois la valeur d'origine, de préférence entre 0,25 et 0,25. La viscosité est mesurée par un dispositif Helipath (Labomat) (broche S96 à 10 tpm, 1 min). Les valeurs après 24 heures de repos de l'enduit peut être comprise entre 150000cps et 1500000cps, de préférence entre 250000cps et 1200000cps, plus préférentiellement entre 300000cps et 950000cps. La durée de reconstitution du seuil d'écoulement, à savoir la durée entre l'application et le moment où l'enduit retrouve une viscosité proche de sa viscosité d'origine est compris généralement entre 1 et 120 min, de préférence entre 5 et 60 min.

L'enduit selon l'invention présente un pH qui peut être contrôlé grâce au tampon, qui peut amener le pH à des valeurs basiques, par exemple 8 à 9,5.

L'enduit selon l'invention présente un extrait sec qui peut varier, par exemple de 50 à 70%, de préférence 53 à 67%. En fonction de l'utilisation, on pourra préférer des valeurs plus ou moins élevées pour cet extrait sec. Pour une application en jointoiement, on préférera la moitié haute de l'intervalle tandis que pour une application en surfaçage on préférera la moitié basse de l'intervalle.

L'enduit selon l'invention présente une ou plusieurs des propriétés suivantes :
- avoir une bonne adhérence sur le papier constituant le parement de la plaque de plâtre; il y a en fait rupture cohésive dans le plâtre de la plaque;
- avoir une bonne adhérence sur un parement du type fibres de verre pour permettre une application directe sans dépose du parement lors de chantiers de rénovation;
- permettre un bon collage et une bonne adhérence de la bande à joint;
- avoir une couleur identique à celle du papier de parement;
- présenter un retrait après séchage négligeable (par exemple moins de 20% tel que déterminé par le test de l'anneau);
- avoir une absorption de l'eau "proche" de celle du papier de parement, ceci afin d'éviter le recours à une couche de primaire avant l'application d'une tapisserie ou la mise en peinture, selon l'enseignement de la demande WO-A-9702395 précitée;
- permettre une adhérence modérée du papier constituant la tapisserie, de manière à rendre possible un ou plusieurs détapissage(s) ultérieur(s);
- permettre une mise en peinture aisée (même lorsque l'enduit est utilisé comme seul enduit de jointoiement);
- offrir un rendu de surface sensiblement identique à la couche de primaire d'impression habituellement utilisée dans le domaine des constructions de second oeuvre;
- permettre un texturage après application.

### Procédé de préparation de l'enduit selon l'invention

L'enduit selon l'invention peut être préparé par mélange de ses constituants dans un ordre quelconque, ou dans un ordre choisi ou selon un procédé particulier donnant de bons résultats.

Dans le premier cas les différents composants sont ajoutés dans l'eau sous agitation.

Dans le second cas, on préférera ajouter la perlite expansée hydrophobée dans un premier temps, de préférence en présence d'un agent moussant, puis dans un second temps on ajoutera les autres composants. De l'eau peut être ajoutée à la fin pour régler la viscosité, les cas échéant.

Dans le troisième cas, une partie de la charge (typiquement 5 à 10% en poids) est prémélangée avec d'autres composants qui peuvent présenter des difficultés de dispersion dans l'eau, par exemple l'agent glissant et/ou les pigments. A titre d'exemple on pourra utiliser un prémélange de la charge, de l'agent glissant, de l'agent de maniabilité et éventuellement d'un liant sous forme de poudre. La charge minérale est de préférence ajoutée avant le prémélange et le liant après. De l'eau peut être ajoutée à la fin pour régler la viscosité, les cas échéant.

On utilise tout type de mélangeur, de préférence un mélangeur horizontal à alimentation étagée.

### Procédés de construction selon l'invention

L'enduit selon l'invention peut être utilisé pour la réalisation, à l'aide de plaques de plâtre, de nombreux ouvrages tels que des cloisons, des habillages muraux ou des plafonds, suspendus ou non. L'enduit peut aussi être utilisé sur d'autres surfaces, par exemple en béton, notamment lorsque le tampon pour pH basique est présent.

L'enduit selon l'invention convient en particulier à la réalisation d'ouvrage au moyen de plaques de plâtre à parement en papier.

L'enduit selon l'invention est utilisé de préférence en Airless mais il peut aussi être utilisé comme enduit traditionnel.

L'enduit selon l'invention peut être utilisé comme enduit de jointoiement uniquement ou comme enduit de surfaçage ou les deux.

La réalisation d'un ouvrage au moyen de plaques de plâtre comprend généralement la juxtaposition de plaques de plâtre, le remplissage de l'espacement entre les plaques au moyen d'un enduit de remplissage, la pose d'une bande, le recouvrement de la bande au moyen de l'enduit de remplissage, puis le recouvrement de l'enduit de remplissage avec un enduit de finition. L'enduit selon l'invention peut être l'enduit de remplissage et/ou l'enduit de finition. Lorsque l'enduit selon l'invention est utilisé pour le traitement du joint, l'opérateur procède comme suit. Sur une bande appliquée dans les bords amincis l'enduit selon l'invention est appliqué par pulvérisation Airless au droit du joint (avec une buse appropriée), puis quelques minutes après son application (lorsque la viscosité a remonté) l'opérateur procède alors au serrage du joint. Si l'opérateur n'a que le joint à faire, il procédera alors à une seconde application de l'enduit (ou un autre enduit selon l'invention plus particulièrement dédié à la finition) et à un lissage final. Si l'opérateur a toute la surface à enduire, alors il peut appliquer sur toute la surface un même enduit de surfaçage sans avoir à faire la finition du joint auparavant; dans ce cas les enduits de jointoiement et de surfaçage peuvent être identiques ou différents.

Pour la réalisation des joints pour les bords amincis, on utilisera de préférence une bande de grille de verre autocollante, sans couche préalable de remplissage. Pour la réalisation de joints sur plaques à bords ronds, donc sans bande, l'enduit s'utilise de la même façon.

En fonction du niveau de finition désiré on peut procéder, pour le surfaçage ou impression, à une dépose d'un voile d'enduit à l'aide d'une buse à jet large.

L'enduit selon l'invention permet de réaliser une opération le surfaçage et/ou l'impression. Après application, l'enduit peut être structuré à l'aide d'une spatule, d'une lisseuse, d'un rouleau à relief plastique ou tout autre instrument en fonction du relief désiré (relief spatulé, roulé, roulé-écrasé, etc.).

Dans le cas de rénovation de surface de type parement à base de fibres de verre, l'enduit selon l'invention offre une adhérence sur fibre de verre suffisante pour éviter tout ratissage ou dépose préalable du parement.

Une des caractéristiques principales de l'enduit selon l'invention est d'être susceptible d'être projeté par un système dit Airless ou sans air, qui sont des matériels utilisés par les peintres notamment. Ces systèmes offrent des avantages de robustesse, simplicité d'utilisation (compresseur hors des pièces avec une seul tuyau dans la pièce, pas de séchage du produit car absence d'air, etc.). L'invention fournit donc un procédé de jointoiement et/ou surfaçage à l'aide d'un enduit à séchage à base de charge minérale et liant par pulvérisation selon la technique Airless ou sans air. Cette technique Airless fait emploi de pressions importantes, jusque 200 bar. Toutes les machines sont appropriées, notamment M-Tec^{®} forte, Graco^{®} Spackmax^{®}, Elmyggan^{®}, etc.

L'enduit selon l'invention permet donc un gain de temps et de main d'oeuvre considérable.

### EXEMPLES.

Les exemples suivants sont donnés à titre uniquement illustratif et n'ont aucun caractère limitatif. On mesure la viscosité en sortie de malaxeur, et éventuellement après repos. Dans les exemples on utilise les composants suivants:

| Composant | Caractéristiques | |
|---|---|---|
| Perlite No. 1 | Perlite expansée hydrofugée | |
| | d50=50 microns | |
| Perlite No. 2 | Perlite expansée hydrofugée | |
| | d50=70 microns | |
| Perlite No. 3 | Perlite expansée hydrofugée | |
| | d50=50-60 microns | |
| CaCO₃ No. 1 | d50=10 microns | |
| CaCO₃ No. 2 | d50=15 microns | |
| Prémélange No. 1 | CaCO₃ No. 2 | 44,8% |
| | Ether cellulosique | 8,8% |
| | Attapulgite | 32% |
| | TiO₂ | 14,4% |
| Prémélange No. 2 | CaCO₃ No. 2 | 31,08% |
| | Ether cellulosique | 2,70% |
| | Attapulgite | 20,72% |
| | Stéarate de zinc | 4,73 |
| | Liant No. 3 | 31,08% |
| | TiO₂ | 9,69% |
| Liant No. 1 | Copolymère vinyl acétate/éthylène en dispersion dans l'eau | |
| Liant No. 2 | Copolymère styrénique/acrylique en dispersion dans l'eau | |
| Liant No. 3 | Copolymère vinyl acétate/vinyl ester d'un acide à chaîne longue/ester d'acide acrylique en dispersion dans l'eau | |

Pour préparer les enduits, on procède de la façon suivante. On utilise un malaxeur horizontal. Dans l'eau de départ on ajoute la perlite sous agitation pendant 2 minutes. On ajoute ensuite le biocide et l'anti-mousse, puis la charge minérale. On ajoute ensuite le prémélange, puis le ou les liant(s) et enfin on termine avec l'eau de réglage de viscosité, avec éventuellement le siliconate.

### Exemple 1.

On prépare la composition 1 suivante:

| Composant | Quantité |
|---|---|
| Eau départ | 1600 |
| Perlite No. 1 | 250 |
| Biocide | 15 |
| Antimousse | 10 |
| CaCO₃ No. 1 | 1630 |
| Prémélange No. 1 | 250 |
| Liant No. 1 | 140 |
| Liant No. 2 | 140 |
| Eau réglage | 100 |

On obtient les caractéristiques suivantes:

| | |
|---|---|
| pH | 7,8 |
| Densité | 1,2 |
| Viscosité | 360 000 cps |
| % extrait sec | 55,80% |

### Exemple 2.

On prépare la composition 2 suivante:

| Composant | Quantité |
|---|---|
| Eau départ | 1978 |
| Perlite No. 1 | 321,5 |
| Biocide | 18,5 |
| Antimousse | 12 |
| CaCO₃ No. 1 | 2015 |
| Prémélange No. 1 | 309 |
| Liant No. 1 | 173 |
| Liant No. 2 | 173 |

On obtient les caractéristiques suivantes:

| | |
|---|---|
| pH | 8,36 |
| Densité | 1,007 |
| Viscosité | 324 000 cps* |
| % extrait sec | 59,49% |

| | |
|---|---|
| * valeur après repos: 911 000 cps | |

### Exemple 3.

On prépare la composition 3 suivante:

| Composant | Quantité |
|---|---|
| Eau départ | 51,4 |
| Perlite No. 1 | 8,36 |
| Biocide | 0,48 |
| Antimousse | 0,3 |
| CaCO₃ No. 1 | 52,4 |
| Prémélange No. 1 | 8 |
| Liant No. 1 | 4,5 |
| Liant No. 2 | 4,5 |
| Eau réglage | 6 |

On obtient les caractéristiques suivantes:

| | |
|---|---|
| pH | 8,26 |
| Densité | 1,11 |
| Viscosité | 214 000 cps* |
| % extrait sec | 54,67% |

| | |
|---|---|
| * valeur après repos: 826 000 cps | |

### Exemple 4.

On prépare la composition 4 suivante:

| Composant | Quantité |
|---|---|
| Eau départ | 58,5 |
| Perlite No. 3 | 9,765 |
| Biocide | 0,555 |
| Antimousse | 0,375 |
| CaCO₃ No. 2 | 61,2 |
| Prémélange No. 1 | 9,39 |
| Liant No. 1 | 5,257 |
| Liant No. 2 | 5,257 |

On obtient les caractéristiques suivantes:

| | |
|---|---|
| pH | 8,86 |
| Densité | 1,25 |
| Viscosité | 202 000 cps |
| % extrait sec | 53,95% |

### Exemple 5.

On prépare la composition 5 suivante:

| Composant | Quantité |
|---|---|
| Eau départ | 50 |
| Perlite No. 1 | 8,36 |
| Biocide | 0,48 |
| Antimousse | 0,3 |
| CaCO₃ No. 1 | 52,4 |
| Prémélange No. 1 | 8 |
| Liant No. 1 | 4,5 |
| Liant No. 2 | 4,5 |
| Eau réglage | 7,4 |

On obtient les caractéristiques suivantes:

| | |
|---|---|
| pH | 8,54 |
| Densité | 1,108 |
| Viscosité | 220 000 cps |
| % extrait sec | 54,3% |

### Exemple 6.

On prépare la composition 6 suivante:

| Composant | Quantité |
|---|---|
| Eau départ | 38 |
| Perlite No. 3 | 7,8 |
| Biocide | 0,4 |
| Antimousse | 0,3 |
| CaCO₃ No. 2 | 49,4 |
| Prémélange No. 2 | 11,1 |
| Liant No. 1 | 4,2 |
| Eau réglage | 2 |

On obtient les caractéristiques suivantes:

| | |
|---|---|
| pH | 8,22 |
| Densité | 1,21 |
| Viscosité | 225 000 cps |
| % extrait sec | 63,1% |

### Exemple 7.

On prépare la composition 7 suivante:

| Composant | Quantité |
|---|---|
| Eau départ | 38 |
| Perlite No. 2 | 7,4 |
| Biocide | 0,65 |
| Antimousse | 0,3 |
| CaCO₃ No. 2 | 49,4 |
| Prémélange No. 2 | 11,7 |
| Liant No. 1 | 4,2 |

On obtient les caractéristiques suivantes:

| | |
|---|---|
| pH | 7,8 |
| Densité | 1,208 |
| Viscosité | 248 000 cps |
| % extrait sec | 62,88% |

### Exemple 8.

On prépare la composition 8 suivante:

| Composant | Quantité |
|---|---|
| Eau départ | 3800 |
| Perlite No. 2 | 740 |
| Biocide | 59 |
| Antimousse | 30 |
| CaCO₃ No. 2 | 4940 |
| Prémélange No. 2 | 1163 |
| Liant No. 1 | 420 |
| Siliconate | 53 |

On obtient les caractéristiques suivantes:

| | |
|---|---|
| pH | 11,87 |
| Densité | 0,910 |
| Viscosité | 73 000 cps* |
| % extrait sec | 63,96% |

| | |
|---|---|
| * valeur après repos: 250 000 cps | |

### Exemple 9.

On prépare la composition 9 suivante:

| Composant | Quantité |
|---|---|
| Eau départ | 84 |
| Perlite No. 3 | 15,6 |
| Biocide | 1,282 |
| Antimousse | 0,6 |
| CaCO₃ No. 2 | 98,8 |
| Prémélange No. 2 | 23,3 |
| Liant No. 1 | 8,4 |

On obtient les caractéristiques suivantes:

| | |
|---|---|
| pH | 7,85 |
| Densité | 1,090 |
| Viscosité | 175 000 cps |
| % extrait sec | 63,7% |

| | |
|---|---|
| * valeur après repos: 317 000 cps | |

### Exemple 10.

On prépare la composition 10 suivante:

| Composant | Quantité |
|---|---|
| Eau départ | 48,5 |
| Perlite No. 3 | 10,44 |
| Azurant bleu | 0,015 |
| Biocide | 0,675 |
| Antimousse | 0,4 |
| CaCO₃ No. 2 | 66,150 |
| Prémélange No. 2 | 15,5 |
| Liant No. 1 | 5,58 |
| Siliconate | 0,74 |

On obtient les caractéristiques suivantes:

| | |
|---|---|
| pH | 9,03 |
| Densité | 1,125 |
| Viscosité | 95 000 cps* |
| % extrait sec | 65,71% |

| | |
|---|---|
| * valeur après repos: 195 000 cps | |

### Exemple 11.

On prépare la composition 11 suivante:

| Composant | Quantité |
|---|---|
| Eau départ | 58,3 |
| Perlite No. 1 | 9,65 |
| Biocide | 0,675 |
| Antimousse | 0,38 |
| CaCO₃ No. 1 | 60,5 |
| Prémélange No. 1 | 9,27 |
| Liant No. 1 | 5,2 |
| Liant No. 2 | 5,2 |

On obtient les caractéristiques suivantes:

| | |
|---|---|
| pH | 8,50 |
| Densité | 1,100 |
| Viscosité | 235 000 cps |
| % extrait sec | 54,25% |

### Exemple 12.

On a réalisé des joints par pulvérisation avec une machine Airless M-Tec avec 25m de tuyau en 19mm et 15m en 15mm, soit un total de 40m de longueur. La buse présente un angle de 60° et une ouverture de 51/1000 pouce.

Après collage de la grille de verre au droit du joint, la pulvérisation de l'enduit 10 à une distance de 30cm puis dressage des joints traités quelques minutes après application conduit à des joints de bonne qualité.

On procède maintenant à la pulvérisation sur des plaques avec joints déjà traités. Les mêmes outils sont utilisés, mais on pulvérise cette fois l'enduit 11 de sorte à former une bande de pulvérisation d'une largeur de 70cm. Sans lissage on obtient un enduit granité décoratif brut de pulvérisation. Le lissage de l'enduit pulvérisation ne pose aucun problème.

## Revendications

1. Enduit de séchage comprenant, en pourcentages massiques rapportés à la masse totale d'enduit :
- de 40 à 60% d'une charge minérale ayant un diamètre d50 compris entre 5 et 20 microns, de préférence entre 10 et 15 microns;
- de 5 à 10% de perlite expansée hydrophobée ayant un diamètre d50 compris entre 20 et 100 microns; et
- de 4 à 20% d'un liant.

2. Enduit selon la revendication précédente, comprenant:
- de 40 à 50% d'une charge minérale;
- de 6 à 7,5% de perlite expansée hydrophobée; et
- de 5 à 10% d'un liant.

3. Enduit selon la revendication 1 ou 2, dans lequel la perlite expansée hydrophobée présente un d50 compris entre 30 et 70.

4. Enduit selon l'une des revendications précédentes, dans lequel le liant est choisi parmi les homopolymères d'alcool polyvinylique, les homopolymères acétates de polyvinyle (plastifiés ou non), les copolymères éthylène/acétate de vinyle (EVA plastifiés ou non), éthylène/versatate de vinyle, acétate de vinyle/versatate de vinyle, polyacryliques, copolymères acétate de vinyle/acryliques, copolymères styrèniques/acryliques, styrène/butadiène, les terpolymères acétate de vinyle/versatates de vinyle /maléates de vinyle, acétate de vinyle/versatate de vinyle/acryliques, les terpolymères acryliques et leurs mélanges.

5. Enduit selon l'une des revendications précédentes, comprenant en outre:
- un agent glissant en une quantité de 0,5 à 10%, de préférence de 1 à 5%.

6. Enduit selon la revendication précédente, dans lequel l'agent glissant comprend une argile et/ou du talc et/ou di mica et/ou un stéarate.

7. Enduit selon l'une des revendications précédentes, comprenant en outre:
- un agent de maniabilité qui est un agent rétenteur d'eau et épaississant, en une quantité de 1 à 15‰.

8. Enduit selon la revendication précédente, dans lequel l'agent rétenteur d'eau est un dérivé de cellulose.

9. Enduit selon l'une des revendications précédentes, comprenant en outre:
- un agent anti-mousse, en une quantité de 1 à 15‰.

10. Enduit selon la revendication précédente, dans lequel l'agent anti-mousse est un tensio-actif non-ionique.

11. Enduit selon l'une des revendications précédentes, comprenant en outre:
- un dérivé siliconé, en une quantité de 1 à 15‰.

12. Enduit selon la revendication précédente, dans lequel le dérivé siliconé est un siliconate.

13. Enduit selon l'une des revendications précédentes, comprenant:
- de 40 à 50% de carbonate de calcium ayant un diamètre d50 compris entre 5 et 20 microns, de préférence entre 10 et 15 microns;
- de 5 à 10%, de préférence de 6 à 7,5%, de perlite expansée hydrophobée ayant un diamètre d50 compris entre 30 et 70 microns;
- de 5 à 10% d'un liant;
- de 1 à 5% d'un agent glissant comprenant une argile et/ou un stéarate;
- de 1 à 15‰ d'un agent rétenteur d'eau;
- de 1 à 15‰ d'un agent anti-mousse; et éventuellement
- de 1 à 15‰ d'un dérivé siliconé, de préférence un siliconate.

14. Enduit selon l'une des revendications précédentes, dans lequel la densité est comprise entre 0,9 et 1,3, de préférence entre 1 et 1,25, plus préférentiellement 1,15 à 1,21.

15. Enduit selon l'une des revendications précédentes, dans lequel la viscosité après 24 heures de repos de l'enduit peut être comprise entre 150000cps et 1500000cps, de préférence entre 250000cps et 1200000cps, plus préférentiellement entre 300000cps et 950000cps.

16. Enduit selon l'une des revendications précédentes, dans lequel la viscosité sous cisaillement est égale à 0,2 à 0,6 fois la viscosité sans cisaillement, de préférence 0,25 à 0,35 fois.

17. Enduit selon l'une des revendications précédentes, dans lequel la durée de reconstitution du seuil d'écoulement présente une durée caractéristique entre 1 et 120 min, de préférence entre 5 et 60 min.

18. Enduit selon l'une des revendications précédentes, présentant un extrait sec de 50 à 70%, de préférence 53 à 67%.

19. Procédé de préparation d'un enduit selon l'une quelconque des revendications 1 à 18, dans lequel on mélange les constituants de l'enduit dans un ordre quelconque.

20. Procédé de préparation d'un enduit selon l'une quelconque des revendications 1 à 18, dans lequel on mélange dans un premier temps la perlite puis les autres composants.

21. Procédé de préparation d'un enduit selon l'une quelconque des revendications 1 à 18, dans lequel on prémélange une partie de la charge minérale avec au moins une partie des composants difficilement dispersables.

22. Procédé de réalisation d'un ouvrage, comprenant la juxtaposition de plaques de plâtre présentant un parement en papier, éventuellement la pose d'une bande, le recouvrement du joint entre les plaques au moyen d'un enduit de séchage à base d'une charge et de liant, **caractérisé en ce que** l'enduit est appliqué par la technique Airless ou sans air et **en ce que** l'enduit est un enduit selon l'une des revendications 1 à 18.

23. Procédé selon la revendication 22, comprenant une étape supplémentaire de pulvérisation d'un enduit par la technique Airless ou sans air.

24. Procédé selon la revendication 22, comprenant une étape supplémentaire de surfaçage par application d'un second enduit de séchage à base d'une charge et de liant, **caractérisé en ce que** les premier et second enduits sont appliqués par la technique Airless ou sans air.

## Claims

1. Drying compound comprising, in percentages by weight relating to the total weight of the compound:
- 40 to 60% mineral filler with a diameter d50 of between 5 and 20 microns, preferably between 10 and 20 microns;
- 5 to 10% hydrophobic expanded perlite with a diameter d50 of between 20 and 100 microns; and
- 4 to 20% binder.

2. Compound according to the preceding claim, comprising:
- 40 to 50% mineral filler;
- 6 to 7.5% hydrophobic expanded perlite; and
- 5 to 10% binder.

3. Compound according to claim 1 or 2, in which the hydrophobic expanded perlite has a d50 between 30 and 70.

4. Compound according to one of the preceding claims, in which the binder is selected from polyvinyl alcohol homopolymers, polyvinyl acetate homopolymers (plasticised or non-plasticised), ethylene/vinyl acetate copolymers (plasticised or non-plasticises EVAs), ethylene/vinyl versatate copolymers, vinyl acetate/vinyl versatate copolymers, polyacrylics, vinyl acetate/ acrylic copolymers, styrene/acrylic copolymers, styrene/butadiene copolymers, vinyl acetate/vinyl versatate/vinyl maleate terpolymers, vinyl acetate/vinyl versatate/acrylic terpolymers, acrylic terpolymers and blends thereof.

5. Compound according to one of the preceding claims, comprising in addition:
- a slip agent in an amount of 0.5 to 10%, preferably 1 to 5%.

6. Compound according to the preceding claim, in which the slip agent includes a clay and/or talc and/or mica and/or a stearate.

7. Compound according to one of the preceding claims, comprising in addition:
- a workability agent, which is a water-retaining and thickening agent, in an amount of between 1 and 15%.

8. Compound according to the preceding claim, in which the water-retaining agent is a cellulose derivative.

9. Compound according to one of the preceding claims, comprising in addition:
- an anti-foam agent, in an amount of between 1 and 15%.

10. Compound according to the preceding claim, in which the anti-foam agent is a non-ionic surfactant.

11. Compound according to one of the preceding claims, comprising in addition:
- a silicone derivative, in an amount between 1 and 15%.

12. Compound according to the preceding claims, in which the silicone derivative is a siliconate.

13. Compound according to one of the preceding claims, comprising:
- 40 to 50% calcium carbonate with a diameter d50 of between 5 and 30 microns, preferably between 10 and 15 microns;
- 5 to 10%, preferably 6 to 7.5%, hydrophobic expanded perlite with a diameter d50 of between 30 and 70 microns;
- 5 to 10% binder;
- 1 to 5% slip agent including a clay and/or a stearate;
- 1 to 15% water-retaining agent;
- 1 to 15% anti-foam agent; and possibly
- 1 to 15% silicone derivative, preferably a siliconate.

14. Compound according to one of the preceding claims, in which the density is between 0.9 and 1.3, preferably between 1 and 1.25 and most preferred between 1.15 and 1.21.

15. Compound according to one of the preceding claims, in which, after 24 hours rest, the viscosity of the compound can be between 150 000cps and 1 500 000cps, preferably between 250 000cps and 1 200 000pcs and most preferred between 300 000cps and 950 000cps.

16. Compound according to one of the preceding claims, in which the viscosity under shear is equal to 0.2 to 0.6 times the viscosity without shear, preferably 0.25 to 0.35 times.

17. Compound according to one of the preceding claims, in which the time for the yield point to recover is a characteristic time of between 1 and 120 min, preferably between 5 and 60 min.

18. Compound according to one of the preceding claims, having a solids content of between 50 and 70%, preferably between 53 and 67%.

19. Method of preparing a compound in accordance with any one of claims 1 to 18, in which the constituents of the compound are mixed in any kind of order.

20. Method of preparing a compound in accordance with any one of claims 1 to 18, in which the perlite is mixed first of all followed by the other components.

21. Method of preparing a compound in accordance with any one of claims 1 to 18, in which a part of the mineral filler is premixed with at least a part of the components that are difficult to disperse.

22. Method of producing a piece of work that comprises the juxtaposition of paper-faced plasterboards, possibly the application of a tape, the covering of the joint between the boards by means of a drying compound based on a filler and binder, **characterised in that** the compound is applied using the Airless technique or without air and **in that** the compound is a compound according to one of claims 1 to 18.

23. Method according to claim 22, comprising an additional step of spraying a compound using the Airless technique or without air.

24. Method according to claim 22, comprising an additional step of surfacing by applying a second drying compound based on a filler and binder, **characterised in that** the first and second compounds are applied using the Airless technique or without air.

## Patentansprüche

1. Trocknungsanstrich, umfassend in Masseprozent, bezogen auf die Gesamtanstrichmasse:
- 40 bis 60 % eines mineralischen Füllstoffes mit einem Durchmesser d50 zwischen 5 und 20 Mikrometer, vorzugsweise zwischen 10 und 15 Mikrometer;
- 5 bis 10 % hydrophobiertes expandiertes Perlit mit einem Durchmesser d50 zwischen 20 und 100 Mikrometer; und
- 4 bis 20 % eines Bindemittels.

2. Anstrich nach dem vorhergehenden Anspruch, umfassend:
- 40 bis 50 % eines mineralischen Füllstoffes;
- 6 bis 7,5 % von hydrophobiertem expandiertem Perlit; und
- 5 bis 10 % eines Bindemittels.

3. Anstrich nach Anspruch 1 oder 2, bei dem das hydrophobierte expandierte Perlit einen d50 zwischen 30 und 70 aufweist.

4. Anstrich nach einem der vorhergehenden Ansprüche, bei dem das Bindemittel unter den Homopolymeren von Polyvinylalkohol, den Homopolymeren von Polyvinylazetaten (plastifiziert oder nicht), den Copolymeren Ethylen/Vinylazetat (EVA plastifiziert oder nicht), Ethylen/Vinylversatat, Vinylazetat/Vinylversatat, Polyacryl, den Copolymeren Vinylazetat/Acryl, den Copolymeren Styrol/Acryl, Styrol/Butadien, den Terpolymeren Vinylacetat/Vinylversatat/Vinylmaleat, Vinylacetat/ Vinylversatat/Acryl, den Acryl-Terpolymeren und ihren Mischungen ausgewählt wird.

5. Anstrich nach einem der vorhergehenden Ansprüche, ferner umfassend:
- ein Gleitmittel in einer Menge von 0,5 bis 10 %, vorzugsweise von 1 bis 5 %.

6. Anstrich nach dem vorhergehenden Anspruch, bei dem das Gleitmittel Ton und/oder Talk und/oder Dimica und/oder Stearat umfasst.

7. Anstrich nach einem der vorhergehenden Ansprüche, ferner umfassend:
- ein Verarbeitungsmittel, das ein Wasser speicherndes und verdickendes Mittel ist, in einer Menge von 1 bis 15 %o.

8. Anstrich nach dem vorhergehenden Anspruch, bei dem das Wasser speichernde Mittel ein Zellulosederivat ist.

9. Anstrich nach einem der vorhergehenden Ansprüche, ferner umfassend:
- ein Antischaummittel in einer Menge von 1 bis 15 ‰.

10. Anstrich nach dem vorhergehenden Anspruch, bei dem das Antischaummittel ein nicht ionisches Tensid ist.

11. Anstrich nach einem der vorhergehenden Ansprüche, ferner umfassend:
- ein Silikonderivat in einer Menge von 1 bis 15 ‰.

12. Anstrich nach dem vorhergehenden Anspruch, bei dem das Silikonderivat ein Silikonat ist.

13. Anstrich nach einem der vorhergehenden Ansprüche, umfassend:
- 40 bis 50 % Kalziumkarbonat mit einem Durchmesser d50 zwischen 5 und 20 Mikrometer, vorzugsweise zwischen 10 und 15 Mikrometer;
- 5 bis 10 %, vorzugsweise 6 bis 7,5 % hydrophobiertes expandiertes Perlit mit einem Durchmesser d50 zwischen 30 und 70 Mikrometer;
- 5 bis 10 % eines Bindemittels;
- 1 bis 5 % eines Gleitmittels, umfassend Ton und/oder Stearat;
- 1 bis 15 ‰ eines Wasser speichernden Mittels;
- 1 bis 15 ‰ eines Antischäummittels; und eventuell
- 1 bis 15 ‰ eines Silikonderivats, vorzugsweise in Silikonat.

14. Anstrich nach einem der vorhergehenden Ansprüche, bei dem die Dichte zwischen 0,9 und 1,3, vorzugsweise zwischen 1 und 1,25 und auf noch bevorzugtere Weise zwischen 1,15 und 1,21 beträgt.

15. Anstrich nach einem der vorhergehenden Ansprüche, bei dem die Viskosität nach 24 Stunden Ruhe des Anstrichs zwischen 150000cps und 1500000cps, vorzugsweise zwischen 250000cps und 1200000cps, auf noch bevorzugtere Weise zwischen 300000cps und 950000cps betragen kann.

16. Anstrich nach einem der vorhergehenden Ansprüche, bei dem die Viskosität unter Scherbeanspruchung gleich 0,2 bis 0,6-mal die Viskosität ohne Scherbeanspruchung, vorzugsweise 0,25 bis 0,35-mal, ist.

17. Anstrich nach einem der vorhergehenden Ansprüche, bei dem die Wiederherstellungszeit der Fließgrenze eine charakteristische Dauer zwischen 1 und 120 min, vorzugsweise zwischen 5 und 60 min, hat.

18. Anstrich nach einem der vorhergehenden Ansprüche, der einen Trockenextrakt von 50 bis 70 %, vorzugsweise 53 bis 67 % aufweist.

19. Verfahren zur Herstellung eines Anstriches nach einem der Ansprüche 1 bis 18, bei dem die Bestandteile des Anstrichs in beliebiger Reihenfolge gemischt werden.

20. Verfahren zur Herstellung eines Anstriches nach einem der Ansprüche 1 bis 18, bei dem zuerst das Perlit und dann die anderen Komponenten gemischt werden.

21. Verfahren zur Herstellung eines Anstriches nach einem der Ansprüche 1 bis 18, bei dem ein Teil des mineralischen Füllstoffes mit mindestens einem Teil der schwer streubaren Komponenten vorgemischt wird.

22. Verfahren zur Herstellung eines Bauwerks, umfassend die Anordnung von Gipsplatten, die eine Papierverkleidung aufweisen, nebeneinander, eventuell die Anbringung eines Bandes, die Abdeckung der Fuge zwischen den Platten mit Hilfe eines Trocknungsanstriches auf Basis eines Füllstoffes und eines Bindemittels, **dadurch gekennzeichnet, dass** der Anstrich durch die Airless-Technik oder luftfreie Technik aufgebracht wird.

23. Verfahren nach Anspruch 22, umfassend einen zusätzlichen Schritt der Zerstäubung eines Anstriches durch die Airless-Technik oder luftfreie Technik.

24. Verfahren nach Anspruch 22, umfassend einen zusätzlichen Schritt der Oberflächenbehandlung durch Aufbringung eines zweiten Trocknungsanstrichs auf Basis eines Füllstoffes und eines Bindemittels, **dadurch gekennzeichnet, dass** der erste und der zweite Anstrich durch die Airless-Technik oder luftfreie Technik aufgebracht werden.

25. Verfahren nach einem der Ansprüche 22 bis 24, bei dem der Anstrich ein Anstrich nach einem der Ansprüche 1 bis 18 ist.

26. Verfahren zur Herstellung eines Bauwerks, umfassend die Anordnung von Gipsplatten, die eine Papierverkleidung aufweisen, nebeneinander, eventuell die Anbringung eines Bandes, die Abdeckung der Fuge zwischen den Platten mit Hilfe eines Anstriches mit verzögerter Bindung, **dadurch gekennzeichnet, dass** der Anstrich durch die Airless-Technik oder luftfreie Technik aufgebracht wird.

27. Verfahren nach Anspruch 26, umfassend einen zusätzlichen Schritt der Zerstäubung eines Anstriches durch die Airless-Technik oder luftfreie Technik.

28. Verfahren nach Anspruch 26, umfassend einen zusätzlichen Schritt der Oberflächenbehandlung durch Aufbringen eines zweiten Anstriches mit verzögerter Bindung, **dadurch gekennzeichnet, dass** der erste und der zweite Anstrich durch die Airless-Technik oder luftfreie Technik aufgebracht werden.

29. Verfahren nach einem der Ansprüche 26 bis 28, umfassend den Schritt des Einspritzens eines Beschleunigungsmittels in den Anstrich unmittelbar vor dem Auftragen durch die Airless-Technik oder luftfreie Technik.
